# EUROPEAN PATENT APPLICATION

(11) **EP 2 299 706 A1**
(43) Date of publication of application: **23.03.2011**
(21) Application number: 08876599.5
(22) Date of filing: 31.12.2008
(51) Int. Cl.: H04N 7/14

(54) **A METHOD AND TERMINAL FOR PRODUCING AND APPLYING ELECTRONIC SERVICE GUIDE INFORMATION**

(30) Priority: 22.07.2008 CN 200810144203
(71) Applicant: ZTE Corporation, Shenzhen, Guangdong 518057 (CN)
(72) Inventor: XING, Xing, Guangdong 518057 (CN)
(74) Representative: Haverkamp, Jens
(86) International application number: PCT/CN2008/002158
(87) International publication number: WO 2010/009586

(57) **Abstract**

A method and terminal for generating and applying ESG information are disclosed. The method comprises: a terminal generates ESG information by using service identifiers and presents the ESG information to a user; the terminal extracts corresponding program playing information from a CMCT or an SMCT by using a service identifier selected from the ESG information by the user, receives the program data according to the program playing information and plays the program. By using the method of the present disclosure, when a terminal can not receive ESG through a broadcasting network, ESG information can still be provided to the user for use, so it is convenient for the user to select and watch his/her own favorite programs; when a terminal can not update ESG through a broadcasting network, if a program source and its corresponding service identifier in a program source transmitting sub-system have changed, the terminal can still update ESG information in time, thus the user would be ensured to select and watch accurate programs.

## Description

### TECHNICAL FIELD

The disclosure relates to a method and terminal for generating and applying electronic service guide (ESG) information.

### BACKGROUND

ESG is information that aims to assist a user to use multimedia broadcasting services. Through ESG, a user can acquire related information of multimedia broadcasting services, such as service name, play time, content outline, etc., thus it is convenient for a terminal user to rapidly retrieve, preview and access the multimedia broadcasting services; ESG provides a user with a good navigation mechanism for watching television programs and enjoying information service, therefore, a user can conveniently and rapidly find out a program he/she cares about and view additional information of the program.

These functions of ESG become an important way and tool for a user to watch programs. Various value added service information can be provided in ESG, so as to make full use of user group of ESG, and bring an adequate income to operators. As information in ESG becomes more and more abundant, it will become a more important task to effectively organize and schedule ESG information.

Currently, an ESG transmitting and receiving system in a broadcasting network comprises three parts: an ESG server, a program source transmitting sub-system and a terminal. In the program source transmitting sub-system, each program source is provided with a corresponding service identifier. The ESG server adds ESG services to the program source transmitting sub-system, then the program source transmitting sub-system puts service identifiers of the program sources into the ESG, and then the ESG (including ESG basic description information, ESG data information and program prompt information) is transmitted through a logical channel; and the service identifiers of the program sources and program playing information are put into a continual service multiplex configuration table (CMCT) in a control information multiplex frame or a short time service multiplex configuration table (SMCT) in a control information multiplex frame and transmitted through a control channel.

Firstly, a terminal receives an ESG basic description table, integrates the received ESG data information to obtain an ESG file according to the ESG basic description table, analyzes the ESG file to obtain service identifiers of program sources and then presents the ESG to a user in real time, so that the user can select a favorite program for playing. After the user selects a program, the terminal searches the CMCT or the SMCT in the control information multiplex frame for corresponding program playing information according to a service identifier corresponding to the program, then extracts the program playing information of the program and performs corresponding configuration to a demodulator, and then a player receives the program data from the demodulator and plays the program.

When ESG is not transmitted because ESG services are not added into a program source transmitting sub-system by an ESG server, or when a terminal fails to receive ESG because of some other reasons, the prior art has the following disadvantages:
1. When ESG is not pre-stored locally, the terminal cannot provide a user with an important way to select and watch programs, thus the terminal cannot play programs; and
2. When a program source and its corresponding service identifier have changed in the program source transmitting sub-system, if the terminal cannot update the locally pre-stored ESG through a broadcasting network in time, such case may occur that program A is selected by a user, while program B is played.

### SUMMARY

The disclosure aims to solve the technical problems by providing a method and terminal for generating and applying ESG information, so that a terminal can still provide ESG to a user under the condition that ESG is not locally pre-stored, which enables the user to select and watch favorite programs.

To solve the technical problems above, the disclosure provides a method for generating and applying ESG information. The method comprises:
a terminal generates ESG information by using service identifiers and presents the ESG information to a user;
the terminal extracts corresponding program playing information from a CMCT or an SMCT by using a service identifier selected from the ESG information by the user, and receives program data according to the program playing information and plays the program.

In addition, the terminal may acquire the service identifiers from a received control information table.

In addition, the control information table may refer to a CMCT or an SMCT.

In addition, the control information table may refer to a continual service configuration table or a short time service configuration table.

In addition, the program playing information may include one or more of the following: modulation mode, code rate, scramble mode, byte interleaving mode and amount of time slots.

The disclosure also provides a terminal for generating and applying ESG information, and the terminal comprises a storage module and a program receiving and playing module, further comprises an information receiving and detecting module, an ESG information generating module and an ESG management module; wherein
the information receiving and detecting module is used for receiving a CMCT or an SMCT, and storing the CMCT or the SMCT in the storage module;
the ESG information generating module is used for generating ESG information by using service identifiers and storing the ESG information in the storage module;
the ESG management module is used for extracting the ESG information from the storage module and presenting it to a user, searching for and extracting corresponding program playing information from the CMCT or the SMCT by using a service identifier selected from the ESG information by the user, and then transmitting the program playing information to the program receiving and playing module;
the program receiving and playing module is used for receiving program data by using the program playing information transmitted from the ESG management module, and playing the program;
the storage module is used for storing the ESG information, also storing the CMCT or the SMCT.

In addition, the information receiving and detecting module may be also used for acquiring the service identifiers from a received control information table.

In addition, the control information table may refer to a CMCT or an SMCT.

In addition, the control information table may refer to a continual service configuration table or a short time service configuration table.

In addition, the program playing information may include one or more of the following: modulation mode, code rate, scramble mode, byte interleaving mode and amount of time slots.

Compared with the prior art, the disclosure has the following advantages: when a terminal cannot receive ESG through a broadcasting network, ESG information can still be provided to a user for use, so it is convenient for the user to select and watch his/her own favorite programs; when a terminal can not update ESG through a broadcasting network, if a program source and its corresponding service in a program source transmitting sub-system identifier have changed, the terminal can still update ESG information in time, thus the user would be ensured to select and watch accurate programs.

### BRIEF DESCRIPTION OF THE DRAWINGS

Fig. 1 is a structure diagram illustrating a mobile multimedia broadcast channel frame;
Fig. 2 is a structure diagram illustrating a CMCT/SMCT;
Fig. 3 is a flowchart illustrating a method for generating and applying ESG information in an embodiment of the disclosure;
Fig. 4 is a structure diagram illustrating a system comprising a program source transmitting sub-system and a terminal in an embodiment of the disclosure; and
Fig. 5 is a structure diagram illustrating a terminal for generating and applying ESG information in an embodiment of the disclosure.

### DETAILED DESCRIPTION

The core concept of the disclosure is as follows: when a terminal can not receive ESG from a logical channel because of some reasons, the terminal extracts service identifiers from a CMCT or an SMCT received through a control channel, then generates local ESG (local ESG refers to ESG information, existing in the form of file or in the form of memory) and presents the local ESG to a user; after the user selects a program according to the local ESG, the terminal finds out its corresponding program playing information from the CMCT or the SMCT by using its corresponding service identifier and plays the program.

The disclosure will be described in details hereinafter in combination with the drawings and embodiments.

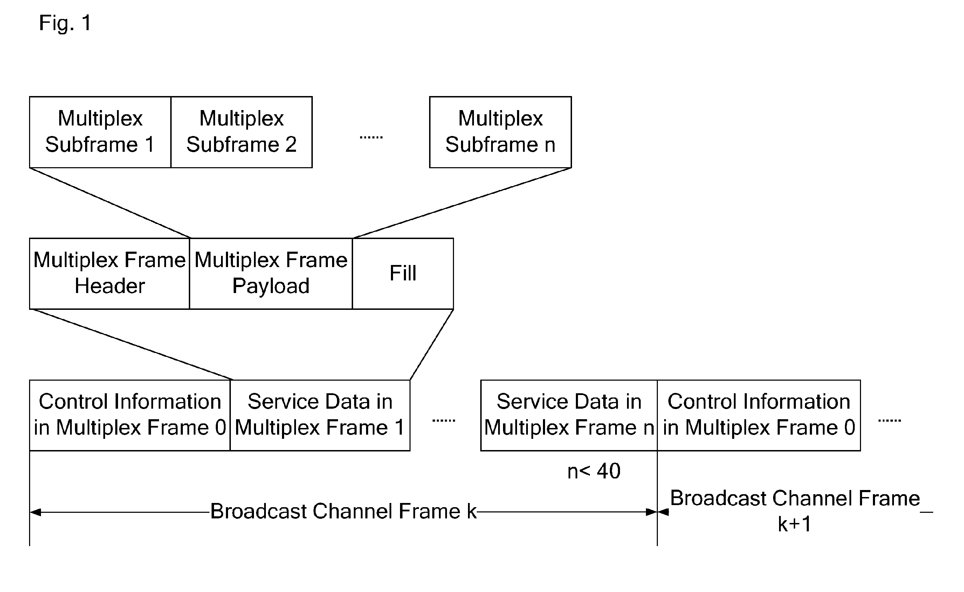

Fig. 1 is a structure diagram illustrating a mobile multimedia broadcast channel frame. As shown in Fig. 1, a control information multiplex frame is a multiplex frame whose multiplex frame identifier is zero in a mobile multimedia broadcast channel frame. The multiplex frame comprises a multiplex frame header, multiplex frame payload and a filling part. Both a CMCT and an SMCT are stored in the multiplex frame payload of the multiplex frame whose identifier is zero.

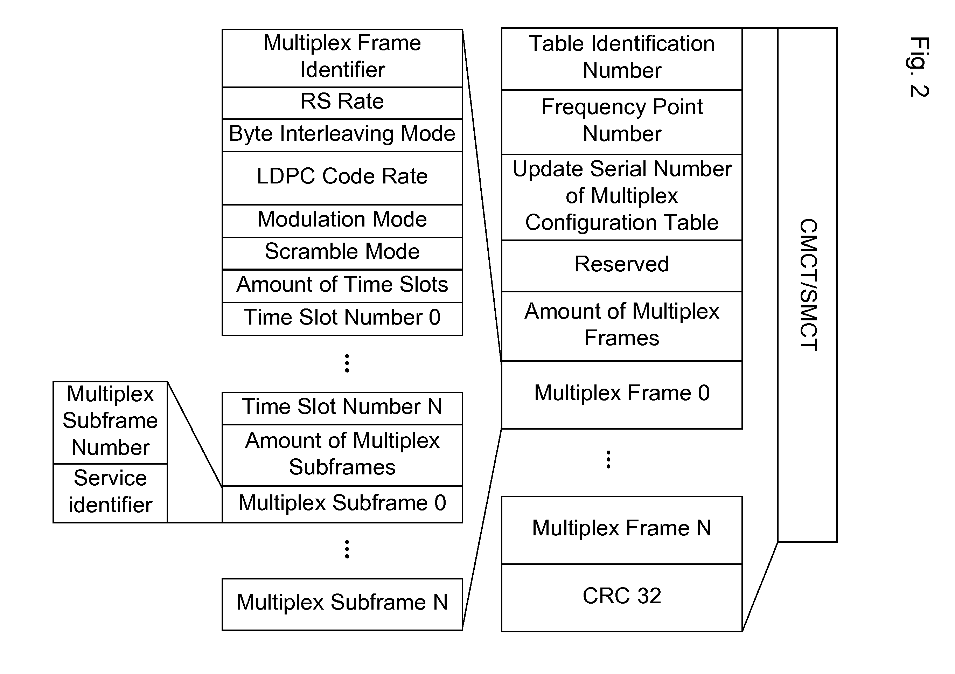

Fig. 2 is a structure diagram illustrating a CMCT/SMCT. As shown in Fig. 2, a service identifier configured for each program source and program playing information (including modulation mode, code rate, scramble mode, byte interleaving mode, amount of time slots, etc.) of each program source are included in the CMCT and the SMCT.

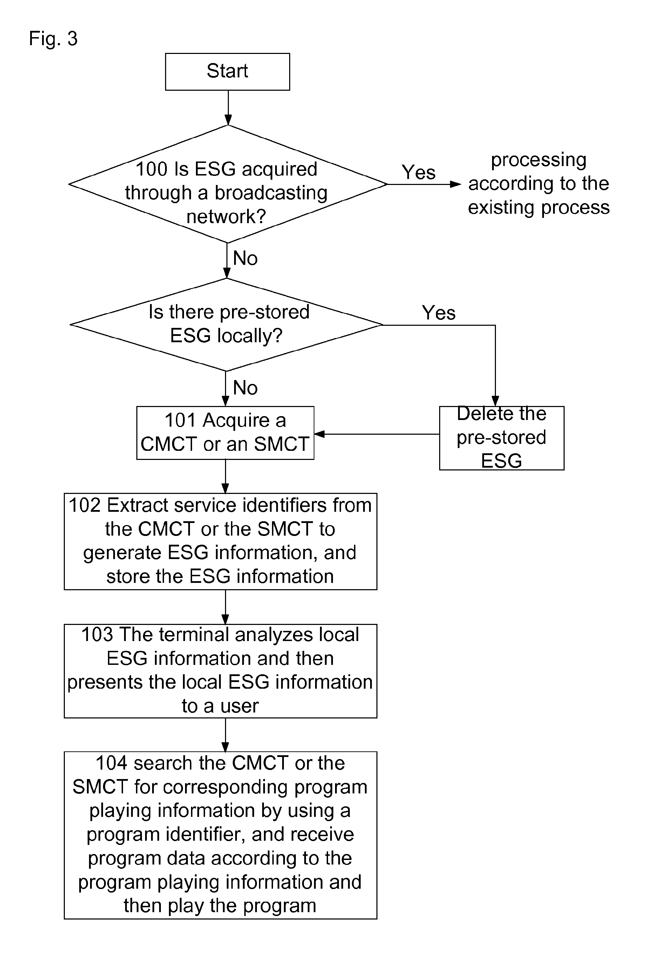

Fig. 3 is a flowchart illustrating a method for generating and applying ESG information in an embodiment of the disclosure; in the embodiment, a service identifier is configured for each program source on the network side, and program playing information of program sources and corresponding service identifiers are put into a CMCT and an SMCT in a control information multiplex frame and then periodically transmitted to a terminal through a control channel. As shown in Fig. 3, the method comprises the following steps:
   step 100, a terminal tries to acquire ESG through a broadcasting network; if the terminal acquires the ESG successfully, the terminal performs subsequent processing according to the existing process; if the terminal fails to acquire the ESG, the terminal performs a detection to determine whether there is pre-stored ESG locally, and if yes, the process proceeds to 101 after the pre-stored ESG is deleted, if not, the process proceeds to step 101 directly;
   step 101, the terminal receives control information multiplex frame data from a control channel, acquires a CMCT or an SMCT through analyzing the multiplex frame data and then stores the CMCT or the SMCT;
   the terminal can store the CMCT or the SMCT in the form of memory data or in the form of file;
   step 102, the terminal generates ESG by using all the service identifiers extracted from the CMCT or the SMCT and stores the ESG;
   the terminal may extract all the service identifiers from the CMCT or the SMCT, and caches the service identifiers, then generates local ESG by certain methods; or the terminal may generate local ESG in real time by certain methods while it extracts service identifiers from the CMCT or the SMCT, and until all the service identifiers are extracted and completely processed, local ESG is generated finally; the local ESG generated by the terminal only has service identifiers of program sources;
   the local ESG can exist in the form of ESG file or in the form of memory data, and the terminal can extract service identifiers to generate local ESG by the following methods:
      based on the standard syntax of extensible markup language (XML), service identifiers are written into an XML file according to the Schema structure (other structures are also available), and local ESG is generated in the form of file; or service identifiers are written into a file in sequence (for example, from large to small or from small to large) to generate local ESG in the form of file; or all the service identifiers are stored in the memory in sequence (for example, from large to small or from small to large) to generate local ESG in the form of memory;
      step 103, the terminal analyzes the local ESG and presents the result to a user;
      since the local ESG generated by the terminal only has service identifiers of program sources, it ensures that the user only can conduct the most fundamental operation to the ESG. For example, the user can add information such as service name, play time and content outline to each service identifier in the local ESG, and also perform ordering and other operations to the service identifiers in the local ESG according to his/her own favor;
      step 104, after the user selects a program, the terminal, by using a service identifier corresponding to the program, searches the CMCT or the SMCT for program playing information corresponding to the service identifier and receives program data in real time according to the program playing information and then plays the program to the user.

A terminal for generating and applying ESG information in an embodiment of the disclosure and a system where the terminal is located shall be described as follows.

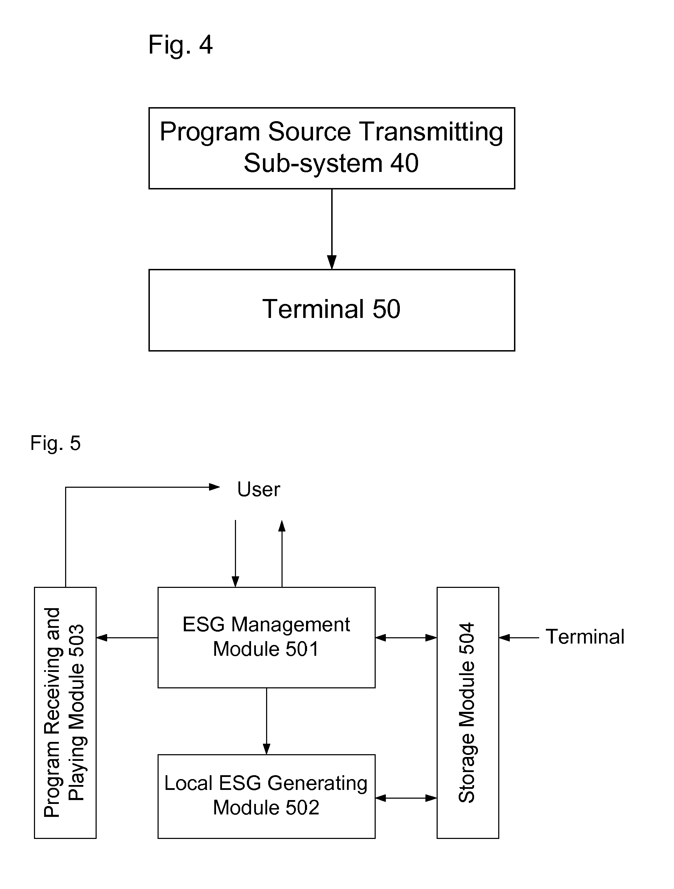

Fig. 4 is a structure diagram illustrating a system comprising a program source transmitting sub-system and a terminal in an embodiment of the disclosure. The system comprises a program source transmitting sub-system 40 and a terminal 50.

The program source transmitting sub-system 40 is used for configuring a service identifier for each program source, putting program playing information of program sources and corresponding service identifiers into a CMCT or an SMCT in a control information multiplex frame and then periodically transmitting the program playing information of the program sources and the corresponding service identifiers to the terminal 50;
the terminal 50 is used for extracting service identifiers from the received CMCT or SMCT to generate local ESG when it detects that ESG transmitted from a network side cannot be received, and then presenting the local ESG to a user; after the user selects a program, the terminal searches for and extract corresponding program playing information from the CMCT or the SMCT by using a service identifier which is corresponding to the selected program, then receives program data according to the program playing information and plays the program.

It is necessary to state that when the terminal 50 detects that ESG transmitted from the network side cannot be received, locally pre-stored ESG (the ESG may be ESG received from the network side and stored before, or local ESG which is not updated) can be deleted.

Fig. 5 is a structure diagram illustrating a terminal for generating and applying ESG information in an embodiment of the disclosure; the terminal comprises an information receiving and detecting module 505, an ESG information generating module 502, a storage module 504, an ESG management module 501 and a program receiving and playing module 503; wherein
the information receiving and detecting module 505 is used for receiving a CMCT or an SMCT and storing the CMCT or the SMCT into the storage module 504; the information receiving and detecting module 505 is also used for notifying the ESG management module 501 to start the ESG information generating module 502 when it detects that ESG cannot be received from a network side;
the ESG information generating module 502 is used for extracting service identifiers from the CMCT or the SMCT stored in the storage module 504 and generating local ESG by using the extracted service identifiers and then storing the local ESG in the storage module 504;
the ESG management module 501 is used for extracting the local ESG from the storage module 504 and presenting the local ESG to a user; after the user selects a program, the ESG management module 501 searches for and extracts corresponding program playing information from the CMCT or the SMCT in the storage module 504 by using a service identifier which is corresponding to the selected program, and transmits the corresponding program playing information to the program receiving and playing module 503; besides, the ESG management module 501 is also used for receiving a notification transmitted from the information receiving and detecting module 505 and deleting the local ESG in the storage module 504;
the program receiving and playing module 503 is used for performing corresponding configuration according to the program playing information (including modulation mode, code rate, etc.) transmitted from the ESG management module 501 and continuously receiving program data and playing the program to the user; generally, the program receiving and playing module is a demodulator and a playing module in the terminal.
The storage module 504 is used for storing the local ESG, also storing the CMCT or the SMCT.

As for some specific details for fulfilling the functions of all the modules in the above system, please refer to the description about the method, and they not repeated here.

According to the basic principle of the disclosure, various changes can also be made to the above embodiments, for example,
besides acquiring service identifiers from a CMCT or an SMCT, a terminal can also acquire service identifiers from other control information tables (for example, a continual service configuration table or a short time service configuration table);
in addition, since changes usually do not occur in service identifiers, a terminal can also acquire service identifiers from locally stored ESG (program playing information in the ESG maybe has changed) and presents the service identifiers as the ESG information to a user.

### INDUSTRIAL APPLICABILITY

By adopting the method and the terminal of the disclosure, ESG information can still be provided to a user under the condition that ESG cannot be received through a broadcasting network, so it is convenient for the user to select and watch his/her own favorite programs; in addition, when a terminal cannot update ESG through a broadcasting network, if a program source and its corresponding service identifier in a program source transmitting sub-system have changed, the terminal can still update ESG in time, thus the user would be ensured to select and watch accurate programs.

## Claims

1. A method for generating and applying electronic service guide (ESG) information, comprising:
a terminal generating ESG information by using service identifiers and presenting the ESG information to a user;
the terminal extracting corresponding program playing information from a continual service multiplex configuration table or a short time service multiplex configuration table by using a service identifier selected from the ESG information by the user, receiving program data according to the program playing information and playing the program.

2. The method according to claim 1, wherein
the terminal acquires the service identifiers from a received control information table.

3. The method according to claim 2, wherein
the control information table refers to a continual service multiplex configuration table or a short time service multiplex configuration table.

4. The method according to claim 2, wherein
the control information table refers to a continual service configuration table or a short time service configuration table.

5. The method according to claim 1, wherein
the program playing information includes one or more of the following: modulation mode, code rate, scramble mode, byte interleaving mode and amount of time slots.

6. A terminal for generating and applying ESG information, comprising a storage module and a program receiving and playing module, and the terminal further comprising an information receiving and detecting module, an ESG information generating module and an ESG management module; wherein
the information receiving and detecting module is used for receiving a continual service multiplex configuration table or a short time service multiplex configuration table, and storing the continual service multiplex configuration table or the short time service multiplex configuration table in the storage module;
the ESG information generating module is used for generating ESG information by using service identifiers and storing the ESG information in the storage module;
the ESG management module is used for extracting the ESG information from the storage module and presenting the ESG information to a user, searching for and extracting corresponding program playing information from the continual service multiplex configuration table or the short time service multiplex configuration table by using a service identifier selected from the ESG information by the user, and transmitting the program playing information to the program receiving and playing module;
the program receiving and playing module is used for receiving program data by using the program playing information transmitted from the ESG management module, and playing the program;
the storage module is used for storing the ESG information, also storing the continual service multiplex configuration table or the short time service multiplex configuration table.

7. The terminal according to claim 6, wherein
the information receiving and detecting module is also used for acquiring the service identifiers from a received control information table.

8. The terminal according to claim 7, wherein
the control information table refers to a continual service multiplex configuration table or a short time service multiplex configuration table.

9. The terminal according to claim 7, wherein
the control information table refers to a continual service configuration table or a short time service configuration table.

10. The terminal according to claim 6, wherein
the program playing information includes one or more of the following: modulation mode, code rate, scramble mode, byte interleaving mode and amount of time slots.
